Europäisches Patentamt

European Patent Office

Office européen des brevets

(11) Publication number: **0 141 038**
**B1**

# (12) EUROPEAN PATENT SPECIFICATION

(45) Date of publication of patent specification: 24.02.88

(51) Int. Cl.⁴: $G\ 02\ B\ 6/04$, $G\ 02\ B\ 6/06$

(21) Application number: 84108136.7

(22) Date of filing: 04.06.82

(80) Publication number of the earlier application in accordance with Art. 76 EPC: **0 068 175**

(54) Image transmission path.

(30) Priority: 18.06.81 JP 92966/81
24.07.81 JP 116053/81
31.07.81 JP 119279/81

(43) Date of publication of application:
**15.05.85 Bulletin 85/20**

(45) Publication of the grant of the patent:
**24.02.88 Bulletin 88/08**

(84) Designated Contracting States:
**DE FR GB IT NL**

(56) References cited:
GB-A-1 219 597
US-A-3 436 142
US-A-3 797 910
US-A-4 076 377

(73) Proprietor: **SUMITOMO ELECTRIC INDUSTRIES LIMITED**
No. 15, Kitahama 5-chome Higashi-ku
Osaka-shi Osaka 541 (JP)

(72) Inventor: **Yoshida, Kenichi c/o Osaka Works**
Sumitomo Elec. Ind., Ltd. 1-3, Shimaya 1-chome
Konohana-ku Osaka (JP)
Inventor: **Ono, Kimizo c/o Osaka Works**
Sumitomo Elec. Ind., Ltd. 1-3, Shimaya 1-chome
Konohana-ku Osaka (JP)
Inventor: **Tsuno, Koichi c/o Osaka Works**
Sumitomo Elec. Ind., Ltd. 1-3, Shimaya 1-chome
Konohana-ku Osaka (JP)
Inventor: **Nishikawa, Mitsuru c/o Osaka Works**
Sumitomo Elec. Ind., Ltd. 1-3, Shimaya 1-chome
Konohana-ku Osaka (JP)

(74) Representative: **Henkel, Feiler, Hänzel & Partner**
Möhlstrasse 37
D-8000 München 80 (DE)

Courier Press, Leamington Spa, England.

EP 0 141 038 B1

## Description

The present invention relates to an image transmission fibre optics bundle according to the precharacterising portion of claim 1.

One prior art image transmission fibre optics bundle is formed of individual optical fibers bundled together in side-by-side relation, each fiber serving as a picture element and consisting of a core having a higher refractive index and a surrounding cladding having a lower refractive index. Due to the difference in refractive index between the core and cladding, light input to the core is totally reflected a great many times at the interface between the core and cladding before reaching the receiving end of the fiber. But light impinging upon the cladding becomes a leaky mode, and as it is reflected or scattered at various interfaces in the interior of the transmission path, it is carried over to the receiving end as noise light, providing only a low-contrast image at that end.

Moreover, the cladding that insulates two adjacent optical fibers is usually made of a glass material having fairly high light transmissivity, so crosstalk sometimes occurs between the fibers. If the diameter of each fiber and the distance between adjacent fibers are as small as the wavelength of the light, a significantly large energy is transmitted by the light that travels outside the fibers. The occurrence of crosstalk becomes more conspicuous as the difference in refractive index between the core and cladding is decreased, and this gain reduces the contrast of the image transmitted to the receiving end. There have been proposed many image transmission fiber optics devices wherein the difference in refractive index between the core and cladding is 4% or less of the refractive index of the core, but no great attention has been paid to the ratio of illumination through one core that crosses through to the next adjacent one, although this ratio is a factor that determines the contrast of the image transmitter to the receiving end. This is mainly because in the early state of their development, image transmission bundles were most frequently used only for the purpose of viewing objects. Recently, however, they have come to be used for pattern recognition and size measurement, and an image transmission bundle that can transmit a high-contrast image suitable for these purposes is demanded.

It is a main object of the present invention to provide a means for achieving the substantial elimination of crosstalk between cores and to provide an image transmission bundle transmitting a high-contrast image.

According to the present invention, this object is achieved by the characterizing feature of claim 1.

The sending and receiving ends of image transmission bundles are usually linked to various optical systems by tubular splices and connectors. If the adhesive fitted between the image transmission bundle and the splicer or connector (hereunder referred to simply as a connector) has a light absorbing property, a significant portion of the crosstalk that may develop in the transmission bundle can be eliminated, and hence, a significantly high-contrast image can be transmitted to the receiving end.

Other objects and advantages of the invention will become apparent from the detailed description which follows when considered in conjunction with the accompanying drawings in which:

Fig. 1 is a longitudinal section showing the structure of one end of an image transmission bundle according to an embodiment of the present invention;

Fig. 2 is an enlarged geometric view of a portion II of Fig. 1.

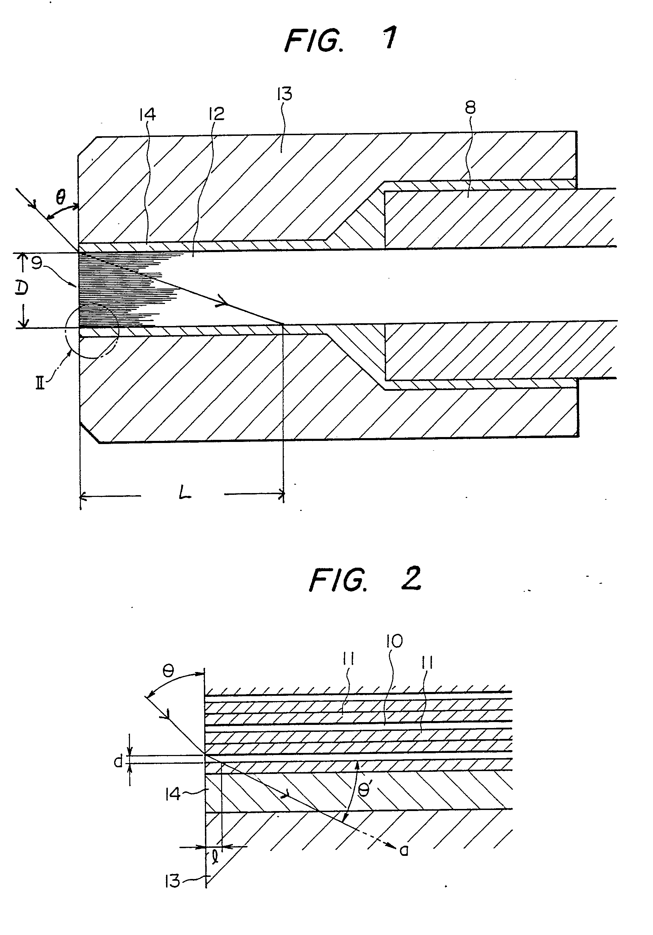

Fig. 1 is a longitudinal sectional view showing the structure of one connected end of an image transmission bundle designed to meet the stated objects of the present invention. Fig. 2 is an enlarged geometric view of a portion II of Fig. 1 indicated by the dashed line. An image transmission fiber optics device 9 at an end where it is uncovered from its sheath 8 is formed of a bundle of aligned optical fibers 12 each consisting of a core 10 for transmitting light and a surrounding cladding 11 having a lower refractive index than the core. The connected end of the image transmission device 9 is fitted into a cylindrical connector 13 made of ceramics or metal. The gap between the connector 13 and the image transmission device 9 is filled with an adhesive 14 that integrally binds the two. To achieve the object of the present invention, the adhesive 14 must have a higher refractive index as well as a higher transmission loss than the claddings 11. To this end, the adhesive 14 may be made of a black epoxy resin or an epoxy resin loaded with india ink, but it is to be understood that any other material may be used if it satisfies the above two stated requirements. The adhesive 14 forms a layer that serves as a light absorber. It has a higher refractive index than the claddings 11 so that any crosstalk that develops at the interface of the outermost optical fibers 12 and the adhesive layer 14 enters the adhesive layer 14 rather than the adjacent fibers. The adhesive layer 14 also has high transmission loss so that the crosstalk may not reflect from the interface of the adhesive layer 14 and the connector 13 to undesirably re-enter the optical fibers 12. Therefore, any crosstalk will be absorbed by the adhesive layer 14 as light is transmitted along the image transmission bundle. It will be apparent to those skilled in the art that if the image transmission device 9 is covered with a jacket, the adhesive layer 14 must have a higher refractive index than the jacket.

The greatest part of the crosstalk is caused by light that falls on the transmitting end faces of the cores at an angle (with respect to the bundle end face) smaller than a limit angle θ (θ, which is defined as illustrated in the drawings, being therefore the complement of the usual "acceptance angle"), and by light that falls on the claddings. Theoretically, every light ray that falls on a core end face at an angle smaller than said limit angle θ always leaks to the exterior of the image transmission device 9, so it is important for the purpose of achieving a high-contrast image that such light be caused to enter the adhesive layer 14. Since θ designates the above limit angle with respect to the end faces of the cores 10 and θ' is the angle of refraction (with respect to the normal to the bundle end face) corresponding to that limit angle θ (θ', which is thus defined as illustrated in the drawings, being therefore the complement of the usual "critical angle" of the fibre), the distance (l) in the axial direction along which the light $a$ falling on a given core travels within that core is represented by:

$$l = \frac{d}{\tan \theta'}$$

where d is the core diameter. If n is the refractive index of the cores 10 and NA is the numerical aperture of the optical fibers 12, the following relation is obtained:

$$\sin \theta' = \frac{\sin \theta}{n} = \frac{NA}{n}$$

$$\tan \theta' = \frac{1}{\sqrt{\left(\dfrac{1}{\sin \theta}\right)^2 - 1}} = \frac{1}{\sqrt{\left(\dfrac{n}{NA}\right)^2 - 1}}$$

Therefore, the following relation is obtained:

$$l = d\sqrt{\left(\frac{n}{NA}\right)^2 - 1}$$

Since l can be regarded as the minimum bonding length of the adhesive layer 14 in relation to the nearest cores, the minimum bonding length L for the entire image transmission device 9 can be represented by the following relation:

$$L = D\sqrt{\left(\frac{n}{NA}\right)^2 - 1}$$

where D is the diameter of the image transmission device 9. Therefore, if the image transmission device has parameters D=1.8 mm, n=1.5 and NA=0.3, all of the light that falls on the image transmission device 9 at an angle of incidence smaller than the limit angle θ can reach, and thus, be absorbed by, the adhesive layer 14 on the condition that the bonding length of the image transmission device is at least about 9 mm.

As described above, the image transmission bundle of the present invention has an adhesive layer that has a higher refractive index than the cladding of each optical fiber and which hence serves as a light absorber that directs any crosstalk to the exterior of the transmission bundle. As a result, the image transmission bundle of the present invention is capable of transmitting a significantly high-contrast image to the receiving end.

## Claims

1. An image transmission fibre optics bundle (9), comprising a plurality of individual optical fibers (12) bundled together in side-by-side relation, each fiber (12) consisting of a core (10) having a higher refractive index and a surrounding cladding (11) having a lower refractive index, one end of said bundle (9) being fixed into connector means (13) by an adhesive layer (14) having a higher transmission loss than that of the fibre claddings (11), characterized in that said adhesive layer (14) has a higher refractive index than that of said fibre claddings (11).

2. An image transmission bundle according to claim 1, characterized in that said adhesive layer (14) has a minimum bonding length

$$L = D\sqrt{(n/NA)^2 - 1},$$

with D being the diameter of the bundle, n the refractive index of the cores and NA the numerical aperture of the fibres, so that all the light incident on the end face of the bundle at an angle, with respect to said end face, which is less than the complement (θ) of the acceptance angle of the fibres can reach, and be thus absorbed by, said adhesive layer (14).

## Patentansprüche

1. Bildübertragung-Lichtleitfaserbündel (9), umfassend eine Vielzahl von einzelnen, in nebeneinander befindlicher Beziehung gebündelten Lichtleitfasern (12), die jeweils aus einem Kern (10) eines höheren Brechungs-index' und einem umschließenden Überzug (11) eines niedrigeren Brechungsindex' bestehen, wobei das eine Ende des Bündels (9) in einem Anschlußmittel (13) mit Hilfe einer Klebmittelschicht (14) befestigt ist, die eine(n) höhere(n) Übertragungsverlust oder Dämpfung als die Faser-Überzüge (11) aufweist, dadurch gekennzeichnet, daß die Klebmittelschicht (14) einen höheren Brechungsindex als die Faser-Überzüge (11) aufweist.

2. Bildübertragung-Lichtleitfaserbündel nach Anspruch 1, dadurch gekennzeichnet, daß die Klebmittelschicht (14) eine Mindest-Verbindungslänge

$$L = D\sqrt{(n/NA)^2 - 1},$$

mit D=Durchmesser des Bündels, n=Brechungsindex der Kerne und NA=numerische Apertur der Fasern, aufweist, so daß das gesamte Licht, das unter einem Winkel zur Stirnfläche, der kleiner ist als das Komplement (θ) des Auffangwinkels der Fasern, auf die Stirnfläche des Bündels auftrifft, die Klebmittelschicht (14) erreichen kann und damit durch diese absorbiert wird.

## Revendications

1. Faisceau (9) de fibres optiques de transmission d'image, comprenant plusieurs fibres optiques (12) distinctes qui sont réunies ensemble latéralement en un faisceau, chaque fibre (12) étant constituée d'une âme (10) et d'un revêtement (11) qui l'entoure et qui possède un indice de réfraction plus petit que l'âme, une extrémité dudit faisceau (9) étant fixée dans un moyen de connexion (13) par une couche d'adhésif (14) qui possède des pertes de transmission plus élevées que celles des revêtements (11) des fibres, caractérisé en ce que ladite couche d'adhésif (14) possède un indice de réfraction supérieur à celui desdits revêtements (11) des fibres.

2. Faisceau de transmission d'image selon la revendication 1, caractérisé en ce que ladite couche d'adhésif (14) possède une longueur de liaison minimale

$$L = D\sqrt{(n/NA)^2 - 1},$$

où D est le diamètre du faisceau, $n$ est l'indice de réfraction des âmes, et NA est l'ouverture numérique des fibres, si bien que toute la lumière arrivant sur la face terminale du faisceau suivant un angle, par rapport à ladite face terminale, qui est inférieur au complément (θ) de l'angle d'admission des fibres peut atteindre ladite couche d'adhésif (14) et être ainsi absorbée par celle-ci.

# FIG. 1

# FIG. 2

1